# EUROPEAN PATENT APPLICATION

(11) **EP 4 667 188 A1**
(43) Date of publication of application: **24.12.2025**
(21) Application number: 24183078.5
(22) Date of filing: 19.06.2024
(51) Int. Cl.: B29C 64/106, B29C 64/112, B29C 64/118, B29C 64/209, B29C 64/40, B33Y 10/00, B33Y 30/00

(54) **PRINTER FOR PRINTING A 3D OBJECT AND A METHOD THEREFOR**

(71) Applicant: Canon Production Printing Holding B.V., 5914 HH Venlo (NL)
(72) Inventor: MESTROM, Paulus M.A., Venlo (NL); CALLEWAERT, Tom W.J., Venlo (NL)
(74) Representative: Canon Production Printing IP Department

(57) **Abstract**

Printing system for printing 3D objects with viscous materials. The printer comprises an inkjet printing assembly which has a large amount of nozzles and configured to jet at least one lower-viscosity resin, and a depositing system of another type than the inkjet printing assembly. The depositing system is configured to deposit at least one higher-viscosity resin on top of the at least one jetted lower-viscosity resin.

## Description

### FIELD OF THE INVENTION

The invention relates to a printing system for printing 3D objects with viscous materials, the printer comprising an inkjet printing assembly which has a large amount of nozzles and configured to jet at least one lower-viscosity resin.

The printing system may hereinafter also be referred to as a printer.

The inkjet printing assembly may comprise one or more print heads.

The term "perpendicular" may hereinafter also be referred to as the term "orthogonal".

The term "nozzle" may be also referred to as "print element".

The term "3D" is meant to be equivalent to the term "three-dimensional".

In this application a resin is a viscous substance of synthetic origin that is convertible into polymers.

### BACKGROUND OF THE INVENTION

Dental resins for permanent restorations are very viscous and most inkjet printing assemblies cannot jet them in small drop volumes (i.e., tens of picoliters). Therefore it is hard to develop a poly-jet printer for the application of permanent restorations. Current solutions to print permanent multi material dental restorations are expensive or have limited multi colour properties.

Novel inkjet technologies for printing with highly viscous materials may be developed. For example, inkjet printing assemblies are developed that can jet fluids with viscosities up to 4000 mPa*s at room temperature (i.e., 380 mPa*s at jetting temperature). However the development of new technologies is expensive. The unit of viscosity "mPa*s" stands for milliPascal times second.

Recently, a new stereolithography (SLA) printer has been developed that allows for printing with multiple resins with high viscosities. However Its current version does not allow for colour gradients within layers parallel to the print bed. Another disadvantage of the current technology is that the resins mix during the print process and can therefore not be reused.

An object of the invention is to provide a printer and method for printing 3D objects with viscous materials, for example for printing permanent dental implants preferably with UV curable resins.

### SUMMARY OF THE INVENTION

According to the present invention this object is achieved by the printer according to the invention, wherein the printer comprises a depositing system of another type than the inkjet printing assembly, wherein the depositing system is configured to deposit at least one higher-viscosity resin on top of the at least one jetted lower-viscosity resin, and a radiation curing system for radiation curing the at least one jetted lower-viscosity resin and the at least one deposited higher-viscosity resin.

The inventors have conceived that the lower-viscosity resin (as well as the support and wrapping material) is printed by means of an inkjet printing assembly, while the higher-viscosity resin is deposited by means of an (automated) depositing system on top of the non-cured lower-viscosity resin.

For convenience reasons and for making a clear distinction the processing of the inkjet printing assembly is hereinafter indicated by the verb "jetting" while the processing of the depositing system is indicated by the verb "depositing".

The lower-viscosity resin may also be called a lower-viscosity resin and the higher-viscosity resin may also be called a higher-viscosity resin.

The radiation curing system may use UV curing, electron beam curing of infrared curing. A radiation curing system which uses UV curing is preferred.

According to an embodiment the at least one lower-viscosity resin is a resin that is jettable in small drop volumes of tenth of picoliters, and the at least one higher-viscosity resin is a resin that is not jettable in the small drop volumes by the inkjet printing assembly without artefacts due to a higher-viscosity. The lower-viscosity resins are defined as resins that can be easily jetted in small drop volumes (tens of picoliters) with an inkjet printing assembly having a large amount of nozzles, whereas higher-viscosity resins are those that cannot (easily) be jetted in small drop volumes due to their higher viscosities.

According to an embodiment the viscosity of the at least one lower-viscosity resin is lower than 20 mPa*s at a highest jetting temperature of the inkjet printing assembly and the viscosity of the at least one higher-viscosity resin is higher than 20 mPa*s at the highest jetting temperature of the inkjet printing assembly.

According to an embodiment the depositing system is configured to jet droplets with a volume larger than 100 picoliters or an extrusion based technology component. The depositing system typically may have only one or a few nozzles or an extrusion based technology. For example, depositing systems may be used that are developed for 3D bioprinting, ceramic printing, etc. Such depositing systems are capable of printing highly viscous materials.

According to an embodiment the depositing system is at least one out of a group of a depositing system for 3D bio printing, a depositing system for ceramic printing, a syringe pump depositing system that is configured to control a flowrate and a deposited volume, a pipette system, a higher-viscosity depositing system that uses piezo inkjet technology, an electromagnetic droplet depositing system and an air pressure droplet depositing system.

The present invention also relates to a method for printing a 3D object in a number of layers by means of a printing system according to any of the preceding claims, wherein the method comprises the steps of
a) the inkjet printing assembly jetting wrapping material in order to enclose at least one area where the at least one lower-viscosity resin and the at least one higher-viscosity resin are intended to be deposited,
b) the inkjet printing assembly jetting the at least one lower-viscosity resin in order to completely cover the at least one area enclosed by the wrapping material,
c) the depositing system depositing at least one large droplet of the at least one higher-viscosity resin in the at least one area,
d) pausing the printing until the at least one deposited lower-viscosity resin and the at least one deposited higher-viscosity resin have flowed out to form a substantially flat surface,
e) radiation curing the at least one jetted lower-viscosity resin and the at least one deposited higher-viscosity resin, and
f) repeating the steps a) - e) for each layer to be deposited.

The idea to position the highly viscous droplet(s) on top of a wet surface is essential because it speeds up the flow. The thicker the liquid layer of low viscosity resins, the faster the highly-viscous droplet(s) flow out. In this way, a full area enclosed by the wrapping material can be faster covered by the highly-viscous resin in a practical print process.

The volume of the droplets of the highly viscous resin should be small enough to still be able to control the colour of the printed object using the lower-viscosity resins. For example, if a layer thickness of 40 micrometers (µm) is selected, a good size for the higher-viscosity droplets is 0.1 to 1 microliters (µL) when printing anterior teeth. Said estimation is based on a typical area per layer. However, since one layer could involve multiple disconnected areas that need to be covered by the highly viscous resin, it is best to use droplets with a volume of roughly 0.1 microliter (µL).

The method according to the present invention provides a way to print multi material permanent restorations with a good control of their colour via the lower-viscosity resins that are jetted with high precision. The higher-viscosity resins ensure that the restorations have a right strength.

In addition to highly viscous resins, resins that cannot be jetted in small droplets due to large (organic, ceramic) particle sizes may be printed with the present method of multi material printing technology as well.

Another advantage of the method according to the present invention is that the low- and higher-viscosity resins can mix, resulting in stronger restorations.

According to an embodiment the method comprises the step of selecting a height of the wrapping material which is higher than or equal a height of the cured resins, and approximately equals the height of the cured resins.

According to an embodiment the method comprises the step of the at least one jetted lower-viscosity resin substantially determining a colour of the 3D object.

The present invention also relates to a computer program product, including computer readable code embodied on a computer readable medium, said computer readable code comprising instructions for executing the steps of a method according to the present invention by means of a printer according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
Fig. 1 is a printing system in which the invented method is applicable;
Fig. 2 - 4 are side views of the printer during the steps of the method according to the present invention;
Fig. 5 is a flow diagram of the method according to the present invention; and
Fig. 6 schematically shows a non-transitory software medium according to the invention.

### DETAILED DESCRIPTION OF EMBODIMENTS

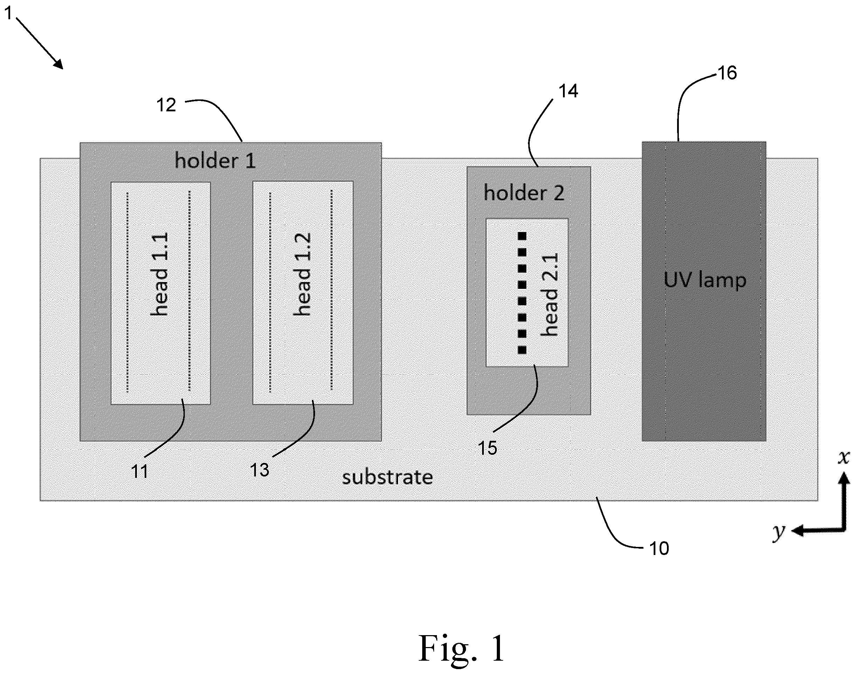

Fig. 1 shows an inkjet printer 1 in which the present invention is applicable. The inkjet printer 1 comprises holders 12, 14 for holding the print heads 11,13,15 for ejecting the resins and a radiation lamp 16 for providing radiation curing light, preferably a UV lamp. The print head 11, 13 are provided with at least one array of nozzles which have small apertures in order to eject the low viscosity resin and which extend in an x direction. The print head 15 is provided with at least one array of nozzles which have large apertures in order to eject the higher-viscosity resin and extend in an x direction. The holders 12, 14 and the radiation lamp 16 are mounted on a carriage (not shown) which bidirectionally traverses over a print surface 10 in a y direction in an xy plane. On the print surface a substrate 10 is provided on which the layers of resins are intended to be deposited.

The printer 1 comprises a print controller (not shown) comprising boxes with electronics for controlling the printheads 11, 13, 15. The print controller is connected to a digital network for receiving print jobs submitted by users. The print controller comprises a Central Processing Unit (CPU), a Graphical Processor Unit (GPU), a Random Access Memory (RAM), a Read Only Memory (ROM), a network unit, an interface unit, a user interface for user input at the printer 1, a hard disk (HD) and an image processing unit such as a Raster Image Processor (RIP). The aforementioned units are interconnected through a bus system. However, the print controller may also be a distributed controller. The user interface may be provided with user input and display means for receiving specifications of the object which define the object to be printed with a particular resolution. However the specifications of the particular resolution may also be part of a submitted print job to be received by the print controller via the digital network.

The CPU controls the printing system 1 in accordance with control programs stored in the ROM or on the HD and a local user interface panel. The CPU also controls the image processing unit and the GPU. The ROM stores programs and data such as boot program, set-up program, various set-up data or the like, which are to be read out and executed by the CPU. The hard disk is an example of a non-volatile storage unit for storing and saving programs and data which make the CPU execute a print process to be described later. The hard disk also comprises an area for saving the data of externally submitted print jobs. The hard disk may also comprise models for 3D objects that may be used according to the present invention. The programs and data on the HD are read out onto the RAM by the CPU as needed. The RAM has an area for temporarily storing the programs and data read out from the ROM and HD by the CPU, and a work area which is used by the CPU to execute various processes. The interface unit connects the controller to client devices and to the printing system 1. The network unit connects the print controller to the network and is designed to provide communication with workstations and with other devices reachable via the network. The image processing unit may be implemented as a software component running on an operation system of the controller or as a firmware program, for example embodied in a field-programmable gate array (FPGA) or an application-specific integrated circuit (ASIC). The image processing unit has functions for reading, editing, interpreting and rasterizing the print job data. Said print job data contains image data to be printed i.e. pixel or voxel data of the object to be printed, described in a Page Description Language or the like, image processing attributes and print settings like a number of layers to be printed on top of each other, a desired resolution, a desired ink material, a desired resolution per desired ink material, a desired ink material per desired resolution, etc.

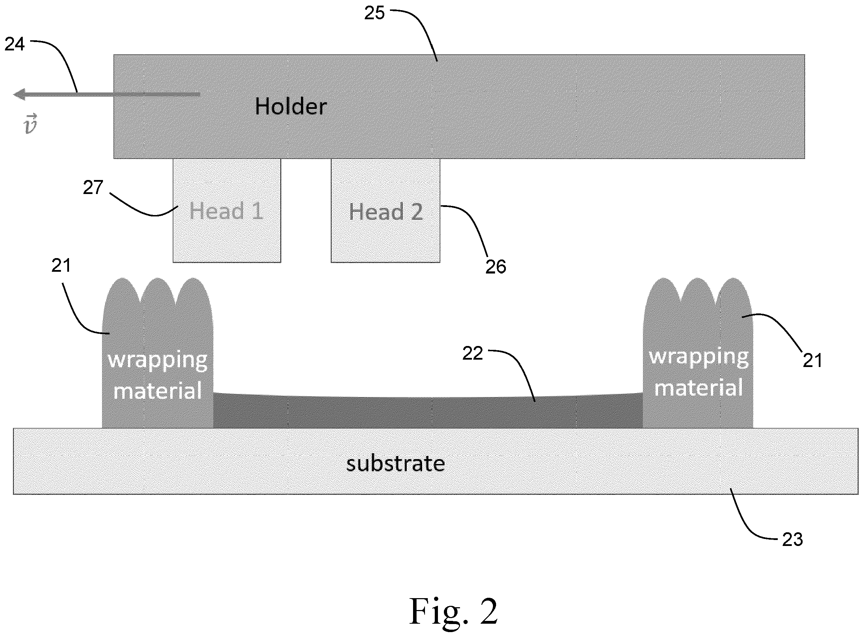

Fig. 2 - 4 show side views of the printer during the steps of the method according to the present invention. For convenience reasons the components of the printer such as the inkjet printing assembly, the depositing system and the radiation curing system are separately depicted in Fig. 2, Fig. 3 and Fig. 4 respectively.

Fig. 2 shows a schematic side view of the printer during steps a) and b) of the method according to the present invention. Wrapping material 21 and lower-viscosity resin 22 are jetted onto the substrate 23. The wrapping material 21 is jetted by a first print head 27 of the inkjet printing assembly. The lower-viscosity resin 22 is jetted by a second print head 26 of the printing assembly. The first print head 27 and the second print head 26 are mounted on a holder 25 which moves relatively in a direction 24 over the substrate 23 with a predetermined speed v.

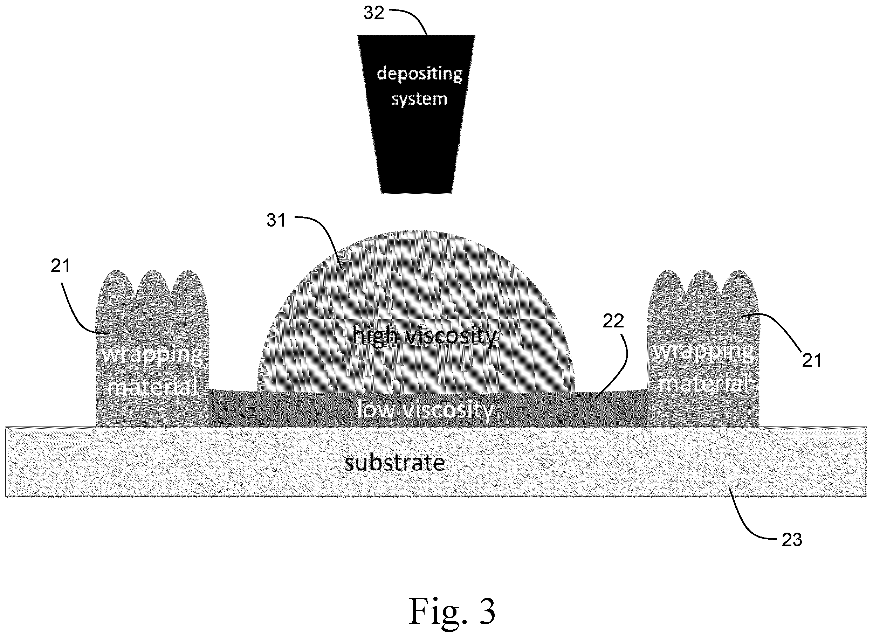

Fig. 3 shows a schematic side view of the printer during step c) of the method according to the present invention. A depositing system 32, e.g. a pipette or a depositing system comprising nozzles having larger nozzle openings, positions a highly viscous resin 31 in the area enclosed by the wrapping material 21 on top of the lower-viscosity resin 22. The depositing system 32 may be mounted on the same holder 25 as shown in Fig. 2.

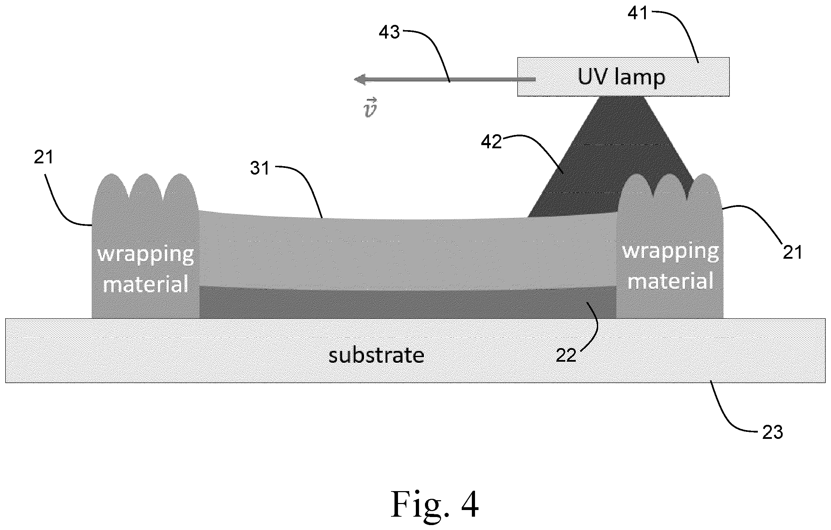

Fig. 4 shows a schematic side view of the printer during step e) of the method according to the present invention. The lower-viscosity resin 22 and the higher-viscosity resin 31 are cured with radiation light 42 by a radiation curing system 41 after both the lower-viscosity resin 22 and the higher-viscosity resin 31 have flowed out to form a reasonably flat surface. The radiation curing system 41 may be moving in a direction 43 with the same speed v as the print heads 26, 27 of the inkjet printing assembly shown in Fig. 2. The radiation curing system 41 may be mounted on the same holder 25 as the print heads 26, 27 and the depositing system 32.

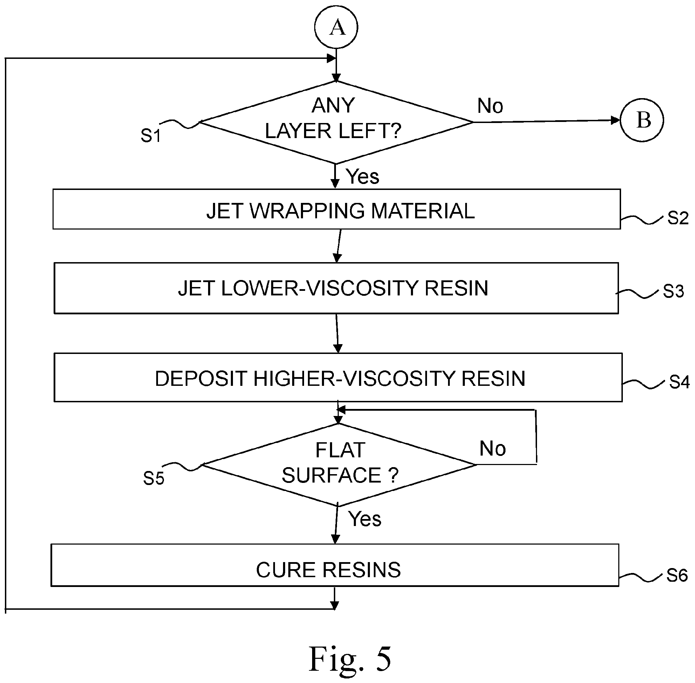

Fig. 5 shows an embodiment of the method of the present invention for printing a 3D object in a number of layers by means of a printing system according to the present invention. The number of layers may be predetermined based on a desired or specified height of the 3D object. The method starts in a starting point A which leads to a first step S1.

In the first step S1 it is checked if all layers for the 3D object have been printed. If so, the method goes to the end point B of the method. If not so, the method proceeds to a second step S2.

In the second step S2 the inkjet printing assembly jets wrapping material in order to enclose at least one area where the at least one lower-viscosity resin and the at least one higher-viscosity resin are intended to be deposited.

The wrapping material may be a material which solidifies quickly when it cools down. In this case, the wrapping material and the lower-viscosity resin can be printed in the same pass. The wrapping material may also be a UV curable substance. In this case, an additional pin cure lamp is needed in the printer. As a result, the wrapping material and the lower-viscosity resins have to be printed in separate passes when the printheads for the wrapping material and the lower-viscosity resin are placed next to each other, since the lower-viscosity resin should be cured after the higher-viscosity resin is deposited on top.

In each layer, the height of the wrapping material is chosen such that it closely matches the height of the lower-viscosity and higher-viscosity resins after having flowed out. In this way, the print gap, which is defined as the gap between the nozzle plate and the surface on which the drops are jetted, can stay small enough to jet the droplets with sufficient accuracy on the print.

In a third step S3 the inkjet printing assembly jets the at least one lower-viscosity resin in order to completely cover the at least one area enclosed by the wrapping material.

In a fourth step S4 the depositing system deposits at least one large droplet of the at least one higher-viscosity resin in the at least one area. The position of the at least one large droplet is chosen such that the least amount of flow is necessary to form a substantially flat surface.

In a fifth step S5 the printing is paused until the at least one deposited lower-viscosity resin and the at least one deposited higher-viscosity resin have flowed out to form a substantially flat surface.

In a sixth step S6 the radiation curing system is radiation curing the at least one jetted lower-viscosity resin and the at least one deposited higher-viscosity resin. The method returns to the first step S1.

The method ends in an end point B.

The method according to the present invention may be applied to print permanent dental implants with UV curable resins.

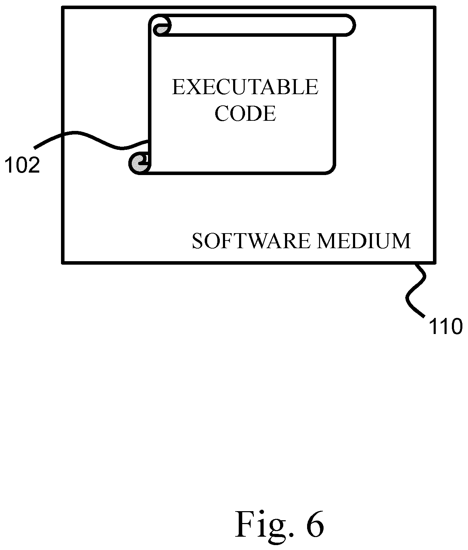

Fig. 6 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. A printing system for printing 3D objects with viscous materials, the printer comprising an inkjet printing assembly which has a large amount of nozzles and configured to jet at least one lower-viscosity resin, and a depositing system of another type than the inkjet printing assembly, wherein the depositing system is configured to deposit at least one higher-viscosity resin on top of the at least one jetted lower-viscosity resin, and a radiation curing system for radiation curing the at least one jetted lower-viscosity resin and the at least one deposited higher-viscosity resin.

2. A printing system according to claim 1, wherein the at least one lower-viscosity resin is a resin that is jettable in small drop volumes of tenth of picoliters (pL), and the at least one higher-viscosity resin is a resin that is not jettable in the small drop volumes by the inkjet printing assembly without artefacts due to a higher-viscosity.

3. A printing system according to claim 1 or 2, wherein a viscosity of the at least one lower-viscosity resin is lower than 20 millipascal times second (mPa*s) at a highest jetting temperature of the inkjet printing assembly and a viscosity of the at least one higher-viscosity resin is higher than 20 millipascal times second (mPa*s) at the highest jetting temperature of the inkjet printing assembly.

4. A printing system according to any of the preceding claims, wherein the depositing system is configured to jet droplets with a volume larger than 100 picoliters (pL) or an extrusion based technology component.

5. A printing system according to claim 4, wherein the depositing system is at least one out of a group of a depositing system for 3D bio printing, a depositing system for ceramic printing, a syringe pump inkjet depositing system that is configured to control a flowrate and a deposited volume, a pipette system, a higher-viscosity depositing system that uses piezo inkjet technology, an electromagnetic droplet depositing system and an air pressure depositing system.

6. A method for printing a 3D object in a number of layers by means of a printing system according to any of the preceding claims, wherein the method comprises the steps of
a) the inkjet printing assembly jetting wrapping material in order to enclose at least one area where the at least one lower-viscosity resin and the at least one higher-viscosity resin are intended to be deposited,
b) the inkjet printing assembly jetting the at least one lower-viscosity resin in order to completely cover the at least one area enclosed by the wrapping material,
c) the depositing system depositing at least one large droplet of the at least one higher-viscosity resin in the at least one area,
d) pausing the printing until the at least one deposited lower-viscosity resin and the at least one deposited higher-viscosity resin have flowed out to form a substantially flat surface,
e) radiation curing the at least one jetted lower-viscosity resin and the at least one deposited higher-viscosity resin, and
f) repeating the steps a) - e) for each layer to be deposited.

7. The method according to claim 6, wherein the method comprises the step of for each layer selecting a height of the wrapping material which is higher than or equal a height of the cured resins, and approximately equals the height of the cured resins.

8. The method according to any of the preceding claims, wherein the method comprises the step of the at least one jetted lower-viscosity resin substantially determining a colour of the 3D object.

9. A computer program product, including computer readable code embodied on a computer readable medium, said computer readable code comprising instructions for executing the steps of a method according to any of the claims 6 - 8 by means of a printer according to any of the claims 1-5.
